# EUROPÄISCHE PATENTSCHRIFT

(11) **EP 0 999 724 B1**
(45) Veröffentlichungstag und Bekanntmachung des Hinweises auf die Patenterteilung: **17.12.2003**
(21) Anmeldenummer: 99117709.8
(22) Anmeldetag: 08.09.1999
(51) Int. Cl.: H05B 3/00

(54) **Lampen- und Reflektoranordnung**
Device including lamps and their reflectors
Dispositif comprenant des lampes et leurs réflecteurs

(30) Priorität: 04.11.1998 DE 19850865; 04.03.1999 DE 19909542
(43) Veröffentlichungstag der Anmeldung: 10.05.2000
(73) Patentinhaber: Advanced Photonics Technologies AG, 83052 Bruckmühl-Heufeld (DE)
(72) Erfinder: Bär, Kai K. O., Dr.-Ing., 83052 Bruckmühl (DE); Gaus, Rainer, Dr.-Ing., 83052 Bruckmühl (DE); Gabel, Klaus, 82024 Taufkirchen (DE)
(74) Vertreter: Bohnenberger, Johannes, Dr.

(56) Entgegenhaltungen:
- EP-A- 0 332 081
- US-A- 3 733 461
- US-A- 4 319 125
- US-A- 4 434 562
- US-A- 5 094 010

## Beschreibung

Die Erfindung betrifft eine Lampen- und Reflektoranordnung zur Bestrahlung von Objekten in Richtungen einer Vorderseite der Anordnung, insbesondere zur Strahlungserwärmung von Objekten, mit einer Kombination einer Infrarotlampe und eines Reflektors. Die Infrarotlampe weist eine langgestreckte Infrarot-Strahlungsquelle zur Emission von Infrarotstrahlung und eine langgestreckte, strahlungsdurchlässige Umhüllung der Infrarot-Strahlungsquelle auf. Der Reflektor dient der Reflexion von nicht in Richtung der Vorderseite emittierter Strahlung und erstreckt sich entlang der Infrarotlampe in deren Längsrichtung.

Ähnliche Anordnungen sind bereits aus der Beleuchtungstechnik bekannt, wobei jedoch anstelle einer Infrarot-Strahlungsquelle eine Lichtquelle zur Erzeugung von sichtbarem Licht vorgesehen ist.

Zur Strahlungserwärmung von Objekten sind bereits Anordnungen der eingangs genannten Art vorgeschlagen worden, wobei die Reflektoroberfläche des Reflektors quer zur Längsrichtung der Infrarotlampe ein trapezförmiges Querschnittsprofil aufweist, welches symmetrisch zu einer Mittelebene der Infrarotlampe ist. Die Mittelebene schneidet die Infrarot-Strahlungsquelle in der Ebene des Querschnitts bzw. erstreckt sich in Längsrichtung durch die Infrarot-Strahlungsquelle, falls diese in gerader Richtung verläuft. Bei dieser Lampen- und Reflektoranordnung bildet also ein ebener Oberflächenbereich der Reflektoroberfläche die Rückseite der Anordnung.

Soll die von der Infrarotlampe abgegebene Infrarot-Strahlung wesentliche Strahlungsleistung im Wellenlängenbereich des kurzen Infrarot haben (Wellenlängen kleiner als 2 µm) beträgt die Oberflächentemperatur der Infrarot-Strahlungsquelle mehr als 1400 K. Soll die von der Infrarotlampe abgegebene Infrarot-Strahlung ein spektrales Stahlungsflußdichte-Maximum im Wellenlängenbereich des nahen Infrarot haben (Wellenlängenbereich zwischen 0,78 µm und 1,4 µm) beträgt die Oberflächentemperatur der Infrarot-Strahlungsquelle mehr als 2100 K. Um diese Temperatur zu erreichen und aufrechtzuerhalten, muß die Temperatur der strahlungsdurchlässigen Umhüllung, insbesondere einer Quarzglasröhre, größer als 250°C sein, sollte jedoch 550°C nicht überschreiten. Bei Umhüllungstemperaturen größer als 550°C nimmt die Lebensdauer der Infrarotlampe rapide ab. Die Grenztemperatur von 550°C ist bei Oberflächentemperaturen der Infrarot-Strahlungsquelle von mehr als 2100 K ohne aktive Kühlung nicht einzuhalten. Eine Zwangskühlung der Umhüllung ist für den Betrieb der Lampe im nahen Infrarot somit unerläßlich.

In neuerer Zeit sind auch Anwendungen bekannt geworden, bei denen es auf eine reaktionsschnelle Steuerbarkeit der emittierten Strahlungsleistung ankommt. Auch für diese Anwendungen wurde bereits vorgeschlagen, sowohl die Umhüllung als auch die Reflektoroberfläche zu kühlen. Auf diese Weise wird einerseits die von der Umhüllung bzw. der Reflektoroberfläche selbst in Richtung des zu bestrahlenden Objekts emittierte Strahlungsleistung minimiert und wird andererseits eine schnelle Abkühlung der Infrarot-Strahlungsquelle ermöglicht. Für die Kühlung der Umhüllung und/oder der Reflektoroberfläche werden bekanntermaßen Luftstrom-Kühleinrichtungen eingesetzt, die eine Zwangskonvektions-Kühlung bewirken. Bei den bekannten Luftstrom-Kühleinrichtungen erfolgt die Luftströmung in Längsrichtung der Lampen- und Reflektoranordnung.

Aus der US-A-3 733 461 ist eine Lampen- und Reflektoranordnung gemäß dem Oberbegriff des Anspruchs 1 bekannt. Weitgehend ähnliche Lampenund Reflektoranordnungen sind auch der EP-A-0 332 081 oder der US-A-4 434 562 zu entnehmen.

Aufgabe der vorliegenden Erfindung ist es, eine Lampen- und Reflektoranordnung der eingangs genannten Art anzugeben, die die Eigenanstrahlung der Lampe reduziert. Eine weitere Aufgabe der vorliegenden Erfindung ist es, den störenden Einfluß der Umhüllung auf die Bestrahlungsstärkeverteilung, die sich durch Überlagerung der direkten und der reflektierten Strahlungsanteile der Strahlungsquelle ergibt, gering zu halten.

Die Aufgabe wird durch eine Lampen- und Reflektoranordnung mit den Merkmalen des Anspruchs 1 gelöst. Weiterbildungen sind Gegenstand der abhängigen Ansprüche.

Gemäß einem Kerngedanken der Erfindung weist die Reflektoroberfläche des Reflektors quer zur Längsrichtung der Infrarotlampe ein zweischenkliges, sich beidseitig einer Mittelebene der Infrarotlampe erstreckendes, vorzugsweise symmetrisches, Querschnittsprofil auf. Gemäß dem Querschnittsprofil verlaufen die Schenkel der Reflektoroberfläche von einem in der Mittelebene liegenden Scheitel aus zunächst in rückwärtige, von der Vorderseite der Anordnung wegweisende Richtungen (Rückwärtsrichtungen), kehren jedoch im weiteren Verlauf, mit zunehmendem Abstand zur Mittelebene um und verlaufen in Richtungen der Vorderseite der Lampen- und Reflektoranordnung (Vorwärtsrichtungen). Das Profil ist also im wesentlichen W-förmig.

Durch die erfindungsgemäße Anordnung wird zumindest ein Teil der in Rückwärtsrichtungen emittierten Strahlung der Infrarotlampe von den in Rückwärtsrichtungen verlaufenden Oberflächenbereichen der Reflektoroberfläche derart reflektiert, daß er nicht wieder auf die Strahlungsquelle und die Umhüllung der Infrarot-Strahlungsquelle trifft. Auf diese Weise wird vermieden, daß erneut ein Teil der Strahlungsenergie dieses Teils der Strahlung von der Strahlungsquelle und der Umhüllung absorbiert und in Wärme umgewandelt werden. Die Lampenlebensdauer ist somit hoch und der Kühlbedarf ist somit gering. Weiterhin wird der störende Einfluß der Umhüllung auf die Bestrahlungsstärkeverteilung reduziert, indem die Rückreflexion über den Reflektor auf die Umhüllung und die damit verbundene Streuung von Strahlung in unterschiedliche Richtungen gering gehalten wird. Insbesondere läßt sich daher eine homogene Bestrahlungsstärkeverteilung auf dem zu bestrahlenden Objekt bzw. den Objekten erzielen.

Insbesondere bei trapezförmigen Reflektorprofilen mit einem sich weder in Vorwärtsrichtungen noch in Rückwärtsrichtungen erstreckenden Oberflächenbereich auf der Rückseite der Infrarotlampe wird dagegen die in Richtung dieses Oberflächenbereichs emittierte Strahlung zumindest in wesentlichen Teilen in Richtung der Strahlungsquelle und der Umhüllung zurückreflektiert.

vorzugsweise verlaufen die Schenkel der Reflektoroberfläche beidseitig der Mittelebene so weit in Vorwärtsrichtungen, daß sich zumindest Teile der Infrarot-Strahlungsquelle zwischen den Schenkeln befinden. Dadurch findet eine Konzentration der nutzbaren, von der Lampen- und Reflektoranordnung ausgehenden Strahlung in Richtungen statt, die im Bereich der zentralen Vorwärtsrichtungen liegen, welche parallel zur Mittelebene bzw. Symmetrieebene der Infrarotlampe verlaufen. Anders ausgedrückt wird die Strahlungsleistung ähnlich der Konzentrationswirkung eines im Querschnitt parabolischen Reflektor zu einem lediglich gering divergierenden Strahlungsbündel konzentriert. Wird also die Bestrahlungsstärke in einer zur Mittelebene senkrechten Bestrahlungsebene betrachtet, so nimmt die Bestrahlungsstärke mit zunehmendem Abstand von der Mittelebene zunächst nur geringfügig ab, um dann jenseits des Randes des konzentrierten Strahlungsbündels mit weiter zunehmendem Abstand zur Mittelebene steil abzufallen. Gegenüber dem parabolischen Reflektorprofil hat das erfindungsgemäße Reflektorprofil, wie bereits vorstehend beschrieben, den Vorteil, daß nur ein geringer Teil der von der Reflektoroberfläche reflektierten Strahlung zurück auf die Strahlungsquelle und die Umhüllung fällt.

Bei einer Weiterbildung der erfindungsgemäßen Anordnung weisen die beiden Schenkel der Reflektoroberfläche jeweils zumindest zwei ebene Oberflächenbereiche auf, die sich in Längsrichtung der Infrarot-Strahlungsquelle erstrecken und die gerade Teilstücke des Querschnittsprofils definieren. Dabei verläuft jeweils zumindest einer der Oberflächenbereiche in eine Rückwärtsrichtung und verläuft jeweils zumindest einer der Oberflächenbereiche, in größerem Abstand zu der Mittelebene, in eine Vorwärtsrichtung. Fertigungstechnisch ist eine Reflektoroberfläche mit ebenen Oberflächenbereichen mit geringem Aufwand verbunden.

Insbesondere verläuft jeweils einer der ebenen Oberflächenbereiche in eine Rückwärtsrichtung und verlaufen jeweils zwei der ebenen Oberflächenbereiche aneinander anschließend und gegeneinander abgewinkelt in Vorwärtsrichtungen. Vorzugsweise endet dabei der in die Rückwärtsrichtung verlaufende Oberflächenbereich in einem geringeren Abstand zur Mittelebene als die Umhüllung der Infrarot-Strahlungsquelle.

Bei einer Weiterbildung führen zwei der in Rückwärtsrichtung verlaufenden ebenen Oberflächenbereiche, jeweils einer von beiden Schenkeln, an der Mittelebene zusammen und schließen einen Winkel zwischen sich ein, der größer als 90° ist, insbesondere größer als 135°. Durch die flache Neigung dieser Oberflächenbereiche gegen eine zur Mittelebene senkrechte Ebene wird gewährleistet, daß die reflektierte Strahlung eine möglichst geringe Anzahl von Reflexionen durchläuft. Weiterhin wird vermieden, daß in Richtung des in Rückwärtsrichtung verlaufenden Oberflächenbereichs emittierte Strahlung durch Mehrfachreflexion dennoch wieder auf die Umhüllung trifft. Besonders bevorzugt wird eine Ausgestaltung, bei der die schwache Neigung des in Rückwärtsrichtung verlaufenden ebenen Oberflächenbereichs gegen die zur Mittelebene senkrechte Ebene groß genug ist, um auch nahe der Mittelebene auftreffende, von der Strahlungsquelle emittierte Strahlung an der Umhüllung vorbeizuleiten. Hierbei ist der Neigungswinkel bzw. der Scheitelwinkel zwischen den Schenkeln auf den Abstand des Scheitels zur Infrarot-Strahlungsquelle und auf die Form und Größe der Umhüllung, insbesondere den Durchmesser der Umhüllung, abgestimmt.

Bei einer anderen bevorzugten Weiterbildung nehmen die beiden Schenkel im Querschnitt einen evolventenförmigen verlauf, wobei die Krümmungsstärke vom Scheitel aus gesehen abnimmt. Vorzugsweise setzen die Evolventen am Scheitel an und enden etwa an der am weitesten in Vorwärtsrichtung liegenden Stelle der Schenkel. Der evolventenförmige Verlauf kann insbesondere auch mit einer Mehrzahl von ebenen Oberflächenbereichen des Reflektors angenähert verwirklicht werden. Die evolventenförmige oder evolventenartige Gestaltung des Reflektorprofils stellt einen guten Kompromiß zwischen den hervorragenden Konzentrations- und Bündelungseigenschaften parabolischer Reflektoren und der Vermeidung von Rückreflexionen auf die Umhüllung der Infrarot-Strahlungsquelle dar. Bei einer Variante des erfindungsgemäßen Reflektors wird ein sich nahe der Mittelebene evolventenartig erstreckender Oberflächenbereich mit einem in größerem Abstand zur Mittelebene in Vorwärtsrichtung verlaufenden Oberflächenbereich kombiniert, der eine parabolische Krümmung aufweist.

Insbesondere zur Bestrahlung großer Objektflächen ist bei einer Weiterbildung der erfindungsgemäße Lampen- und Reflektoranordnung eine Mehrzahl der Kombinationen mit Reflektor und Infrarotlampe nebeneinander angeordnet, wobei die Längsachsen der Infrarotlampen parallel zueinander verlaufen. Dabei können die Reflektorprofile der einzelnen Kombinationen unterschiedlich ausgestaltet sein. Insbesondere können auch die Reflektorschenkel am Rande der Anordnung asymmetrisch zu den jeweiligen Reflektorschenkeln derselben Lampen- und Reflektorkombination ausgestaltet sein.

Falls die Anordnung mindestens drei der Infrarotlampen- und Reflektorkombinationen aufweist, hat vorzugsweise jeweils die Infrarotlampe der am Rande der Anordnung liegenden Kombination eine größere Strahlungsleistung, insbesondere eine um einen Faktor größer oder gleich 1,5, größere Strahlungsleistung. Auf diese Weise wird der oben beschriebene unstetige Verlauf der Bestrahlungsstärke mit zunehmendem Abstand von der Mittelebene noch weiter ausgeprägt. Am Rande des konzentrierten Strahlungsbündels, das für die Bestrahlung von Objekten genutzt werden soll, kann die Bestrahlungsstärke gleich groß, oder sogar größer sein als im Zentralbereich des Strahlungsbündels. In letzterem Fall sind daher Wärmeverluste am Rande des zu bestrahlenden Objekts bzw. des zu bestrahlenden Bereichs kompensierbar.

Vorzugsweise werden als strahlungsdurchlässige Umhüllung der Infrarot-Strahlungsquelle rohrförmige Umhüllungen, insbesondere Quarzglasröhren, verwendet, wobei die Öffnungsbreite des Reflektors etwa doppelt so groß wie der Außendurchmesser wie der Umhüllung ist.

Ist, je nach Anwendung der erfindungsgemäßen Lampen- und Reflektoranordnung, noch Bedarf für eine Zwangskonvektions-Kühlung, so wird vorgeschlagen, mit einer solchen die Umhüllung und die Reflektoroberfläche von der Lampenseite aus zu kühlen. Zusätzlich kann eine Kühlung der Reflektoroberfläche von der anderen Seite der Reflektoroberfläche aus vorgenommen werden. Für eine derartige Kühlung kommen als Kühlmedien nicht nur Gase, sondern auch Flüssigkeiten in Betracht.

Wird der Luftstrom oder ein anderer Fluidstrom etwa in Längsrichtung des rinnenartigen Reflektorraumes geführt, in welchem sich die reflektierte oder die in Richtung des Reflektors emittierte Strahlung ausbreitet, so hat die erfindungsgemäße Anordnung gegenüber einer Anordnung mit trapezförmigem Reflektorprofil den Vorteil, daß größere Luftströme zwischen der Umhüllung und der Reflektoroberfläche hindurchgeführt werden können.

Alternativ wird vorgeschlagen, den Luftstrom quer zur Längsrichtung der Infrarotlampe- und Reflektorkombination zu führen, wobei der Luftstrom zumindest teilweise durch einen Zwischenraum zwischen der Umhüllung und dem Scheitel des Reflektors geführt ist. Bevorzugtermaßen sind dabei die Abmessungen des Zwischenraumes und die Stärke des Luftstromes derart aufeinander abgestimmt, daß zumindest im Bereich des Zwischenraumes Luftwirbel auftreten. Im Vergleich zu wirbellosen Strömungen findet dabei ein schnellerer Wärmeübergang von der Umhüllung und/oder der Reflektoroberfläche auf die vorbeiströmende Luft statt. Eine Wirbelbildung im Bereich des Reflektorscheitels ist vorteilhaft, da sich in diesem Bereich die Umhüllung in geringem Abstand zu der Reflektoroberfläche befindet bzw. da sich die Reflektoroberfläche in diesem Bereich in geringem Abstand zu der Infrarot-Strahlungsquelle befindet. Eine effektive Kühlung in diesem Bereich ist daher besonders wichtig.

Besonders zweckmäßig ist die Kombination einer Infrarotlampe mit einem erfindungsgemäß gestalteten Reflektorprofil, wenn die Infrarotlampe derart ausgebildet und betreibbar ist, daß ein spektrales Strahldichte-Maximum der emittierten Strahlung im Wellenlängenbereich des nahen Infrarot liegt. Unter nahem Infrarot wird der Wellenlängenbereich verstanden, der zwischen dem sichtbaren Wellenlängenbereich und 1,4 µm liegt. Besonders bevorzugt wird die Verwendung einer Infrarotlampe, die bei Oberflächentemperaturen der Infrarot-Strahlungsquelle von 2500 K oder größer, insbesondere bei 2900 K oder größer, betreibbar ist.

Die Erfindung wird nun anhand von Ausführungsbeispielen näher beschrieben. Dabei wird Bezug auf die beigefügte Zeichnung genommen. Die Erfindung ist jedoch nicht auf diese Ausführungsbeispiele beschränkt. Die einzelnen Figuren der Zeichnungen zeigen:
- Fig. 1:: ein erstes Ausführungsbeispiel für die erfindungs-gemäße Lampen- und Reflektoranordnung im Querschnitt und
- Fig. 2:: ein zweites Ausführungsbeispiel im Querschnitt mit vier Infrarotlampen- und Reflektorkombinationen, die parallel versetzt nebeneinander angeordnet sind.

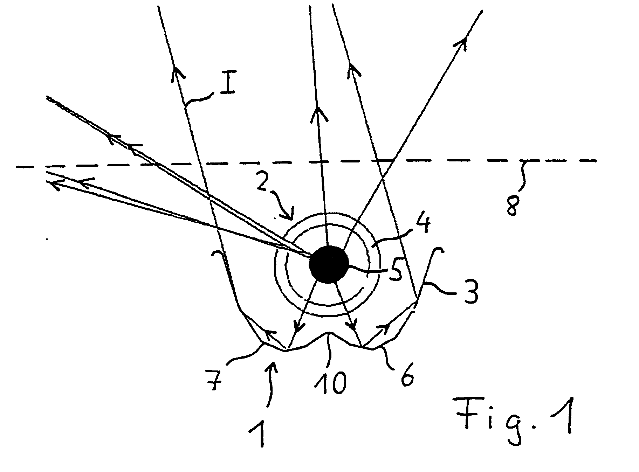

Fig. 1 zeigt eine Lampen- und Reflektoranordnung 1 mit einer Infrarotlampe 2, die einen Glühfaden 5 aufweist, der sich entlang einer zentrumslinie einer Quarzglasröhre 4 erstreckt. Die Quarzglasröhre 4 bildet eine strahlungsdurchlässige Umhüllung des Glühfadens 5. Der Glühfaden 5 ist insbesondere ein Wolframfaden. Weiterhin weist die Lampen- und Reflektoranordnung 1 einen Reflektor 3 auf. Sämtliche beschriebenen Anordnungsteile erstrecken sich in zur Bildebene senkrechter Richtung bei im wesentlichen unverändertem Querschnittsprofil.

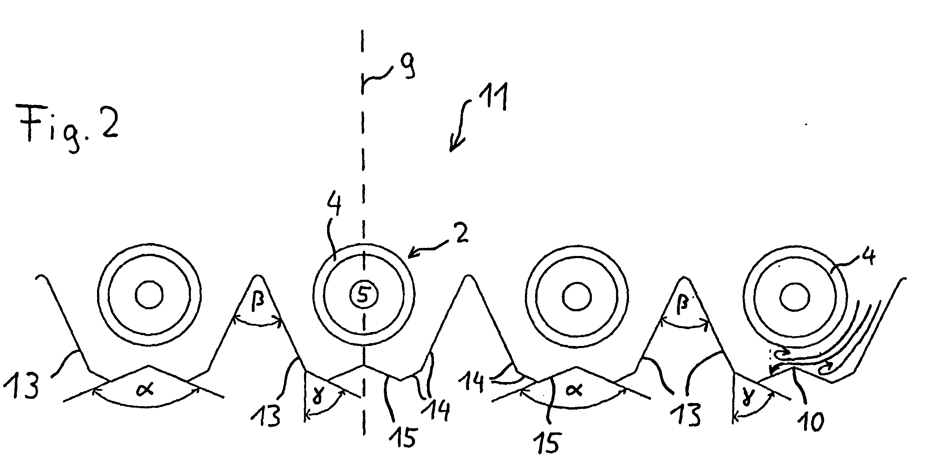

Der Reflektor 3 weist einen Scheitel 10 auf, der sich in einer Mittelebene der Infrarotlampe 2 befindet. Die Mittelebene, die aus Gründen der Übersichtlichkeit nicht in Fig. 1 eingezeichnet ist, bildet eine Symmetrieebene für den Reflektor 3 und die Infrarotlampe 2. Eine Mittelebene 9 einer ähnlichen Lampen- und Reflektorkombination ist in Fig. 2 dargestellt.

Im Querschnittsprofil verläuft jeder der beiden sich an einer Seite der Mittelebene erstreckenden Schenkel des Reflektors 3 zunächst in eine von einer Vorderseite 8 der Lampen- und Reflektoranordnung 1 wegweisende Richtung (Rückwärtsrichtung). In diesem Bereich, wie auch in anderen Bereichen, ist die Reflektoroberfläche als ebene Fläche ausgebildet.

Im weiteren Verlauf der beiden Schenkel des Reflektors 3 schließt sich jeweils ein weiterer, in Rückwärtsrichtung verlaufender Oberflächenbereich an und wiederum daran schließen jeweils drei weitere ebene Oberflächenbereiche an, die jedoch jeweils in eine Vorwärtsrichtung, in Richtung der Vorderseite 8, verlaufen. Die aneinander anschließenden ebenen Oberflächenbereiche sind jeweils gegen ihre Nachbarn abgewinkelt, so daß die Schenkel insgesamt annähernd einen bei gleicher Krümmungsrichtung um die Quarzglasröhre 4 von der Rückseite zur Vorderseite herumführenden gekrümmten Verlauf nehmen. Von dem Scheitel 10 aus gesehen ist der Verlauf der Schenkel ab dem zweiten ebenen Oberflächenbereich etwa evolventenförmig, wobei die Krümmungsstärke der angenäherten Evolvente im Verlauf von dem Scheitel 10 bis zu den an der Vorderseite liegenden Enden abnimmt. Am Scheitel 10 ist der Übergangsbereich zwischen den beiden im Bereich der Mittelebene ansetzenden ebenen Oberflächenbereichen abgerundet.

Beispielhaft sind in Fig. 1 die Ausbreitungsrichtungen von einigen der von dem Glühfaden 5 emittierten Strahlen dargestellt. Ein in Rückwärtsrichtung emittierter Strahl wird beispielsweise zweimal von dem Reflektor 3 reflektiert. Er trifft zum Beispiel auf den zweiten ebenen Oberflächenbereich des linken Schenkels und wird dort zum ersten Mal reflektiert, so daß er auf das weiter von der Mittelebene entfernt liegende Ende des vierten ebenen Oberflächenbereichs trifft. Dort wird er zum zweiten Mal reflektiert, so daß er sich annähernd parallel zu dem fünften ebenen Oberflächenbereich in Richtung der Vorderseite 8 ausbreitet. Aus diesem Grund ist der Strahl ein Randstrahl, der in Fig. 1 mit I bezeichnet ist. Dieser Randstrahl I definiert etwa den Rand des von der Lampen- und Reflektoranordnung 1 abgestrahlten Strahlungsbündels, das auf einer ebenen, zur Mittelebene senkrecht stehenden Bestrahlungsfläche eine räumlich etwa konstante Bestrahlungsstärke hat. Außerhalb des Strahlungsbündels, d. h., mit weiter zunehmendem Abstand zur Mittelebene fällt die Bestrahlungsstärke dagegen steil ab.

In Fig. 1 ist noch ein weiterer in Rückwärtsrichtung emittierter Strahl dargestellt, der zweifach von dem rechten Schenkel des Reflektors 3 reflektiert wird. Dieser Strahl fällt dichter als der andere, von dem linken Schenkel reflektierte Strahl an der Mittelebene auf den zweiten ebenen Oberflächenbereich, wird von diesem in Richtung des näher an der Mittelebene liegenden Endes des fünften ebenen Oberflächenbereichs reflektiert und wird dort in eine Vorwärtsrichtung reflektiert, die etwa parallel zu der Ausbreitungsrichtung des Randstrahls I ist. Weiterhin sind in Fig. 1 noch in Vorwärtsrichtungen emittierte Strahlen dargestellt, die keiner Reflexion durch den Reflektor 3 unterliegen.

Fig. 2 zeigt eine Lampen- und Reflektoranordnung 11 mit insgesamt vier Lampen- und Reflektorkombinationen, die jeweils die gleiche geometrische Gestaltung haben. Der jeweilige Reflektor 13 weist im Unterschied zu dem Reflektor 3, der in Fig. 1 dargestellt ist, pro Schenkel nur drei ebene Oberflächenbereiche 14, 15 auf. Nur der Oberflächenbereich 15 verläuft in eine Rückwärtsrichtung. Die Oberflächenbereiche 15 der beiden Schenkel eines Reflektors 13 schließen am Scheitel 10 des Reflektors 13 einen Scheitelwinkel Ó zwischen sich ein, der etwa 136° beträgt. Der zweite ebene Oberflächenbereich 14 definiert die Richtungsumkehr von dem in Rückwärtsrichtung verlaufenden Teilstück des Schenkels in eine Vorwärtsrichtung. Er schließt mit der Mittelebene 9 bzw. mit einer parallel zu der Mittelebene 9 verlaufenden Ebene einen Umkehrwinkel γ ein, der etwa 65° beträgt. Die dritten ebenen Oberflächenbereiche 14 zweier benachbarten Reflektoren 13 schließen zwischen sich einen Anschlußwinkel β ein, der etwa 50° beträgt. Dabei erstrecken sich die dritten ebenen Oberflächenbereiche 14 soweit in Vorwärtsrichtung, daß sich der gesamte Glühfaden 5 der Infrarotlampen 2 zwischen den Schenkeln befindet. Der Anschlußbereich, in dem die dritten ebenen Oberflächenbereiche 14 der benachbarten Reflektoren 13 ineinander übergehen, ist abgerundet. Die Öffnungsbreite der einzelnen Reflektoren 13, d. h. der Abstand zwischen den Enden der dritten ebenen Oberflächenbereiche 14, die im abgerundeten Anschlußbereich bzw. im abgerundeten Randbereich liegen, beträgt etwa das Doppelte des Außendurchmessers einer der Quarzglasröhren 4.

Die in Fig. 2 gezeigte Lampen- und Reflektoranordnung 11 wird durch eine nicht dargestellte Kühleinrichtung durch Zwangskonvektions-Kühlung luftgekühlt. Der Luftstrom erstreckt sich quer zur Längsrichtung der Anordnung. Er verläuft somit etwa in Bildebene der Fig. 2. In dem Reflektorraum des am weitesten rechts in Fig. 2 dargestellten Reflektors 13 sind beispielhaft Stromlinien des Luftstromes dargestellt. Der Luftstrom tritt von rechts kommend in den Zwischenraum zwischen der Umhüllung 4 und dem rechten Schenkel des Reflektors 13 ein. Im Eintrittsbereich verläuft die Luftströmung noch schwach turbulent. Der im Bereich des Scheitels 10 geringere Abstand zwischen der Umhüllung 4 und dem Reflektor 13 bewirkt jedoch, daß die Luftströmung in diesem Bereich stark turbulent wird und Wirbel aufweist, wie durch Pfeile dargestellt ist. Die lokal auf diesen Bereich begrenzte Verwirbelung führt zu einem besonders guten Wärmeübergang, so daß der für die Kühlung kritische Bereich ausreichend gekühlt wird. Der Bereich um den Scheitel 10 kann einerseits von der Innenseite des Reflektors nicht so gut gekühlt werden wie der Bereich um den zweiten ebenen Oberflächenbereich 14 und empfängt andererseits mehr Strahlungsenergie pro Oberflächeneinheit als die anderen Bereiche des Reflektors 13, da er näher an dem Glühfaden 5 liegt.

Durch die erfindungsgemäße Lampen- und Reflektoranordnung wird im Vergleich zu bekannten Anordnungen, insbesondere mit trapezförmigem Reflektorprofil, ein geringerer Anteil der in Rückwärtsrichtungen emittierten Strahlung wieder in Richtung der Strahlungsquelle und der Umhüllung reflektiert. Dadurch wird einerseits weniger Strahlungsenergie in der Strahlungsquelle und der Umhüllung absorbiert und wird andererseits ein geringerer Anteil der Strahlung von der Umhüllung in Richtungen gestreut, d. h. durch Brechung in Richtungen gelenkt, die weit von der durch die Mittelebene definierte Richtung abweichen. Dadurch kann der Kühlungsbedarf verringert werden und wird ein größerer Anteil der Strahlung in Richtung der Objekte abgegeben, die bestrahlt werden sollen und die üblicherweise etwa symmetrisch zur Mittelebene angeordnet werden. Bei gleicher Lampenleistung ist daher die Bestrahlungsleistung größer. Weiterhin wird eine größere Lebensdauer der Infrarotlampe erreicht, da die Temperatur der Strahlungsquelle nicht durch Eigenanstrahlung erhöht wird und die Umhüllung geringeren thermischen Wechselbelastungen ausgesetzt ist.

### Bezugszeichenliste

- 1: Lampen- und Reflektoranordnung
- 2: Infrarotlampe
- 3: Reflektor
- 4: Quarzglasröhre
- 5: Glühfaden
- 6: rechter Schenkel
- 7: linker Schenkel
- 8: Vorderseite
- 9: Mittelebene
- 10: Scheitel
- 11: Lampen- und Reflektoranordnung
- 13: Reflektor
- 14: ebener Oberflächenbereich
- 15: ebener Oberflächenbereich
- I: Randstrahl
- Ó: Scheitelwinkel
- β: Anschlußwinkel
- γ: Umkehrwinkel

## Patentansprüche

1. Lampen- und Reflektoranordnung (1; 11) zur Bestrahlung von Objekten in Richtungen einer Vorderseite (8) (Vorwärtsrichtungen) der Anordnung, insbesondere zur Strahlungserwärmung von Objekten, mit einer Kombination, die folgendes aufweist:
- eine Infrarotlampe (2), die eine langgestreckte Infrarot-Strahlungsquelle (5) zur Emission von Infrarotstrahlung und eine langgestreckte, rohrförmige strahlungsdurchlässige Umhüllung (4) der Infrarot-Strahlungsquelle (5) aufweist, und
- einen Reflektor (3; 13) zur Reflexion von nicht in Richtung der Vorderseite (8) emittierter Strahlung der Infrarot-Strahlungsquelle (5), der sich entlang der Infrarotlampe (2) in deren Längsrichtung erstreckt, wobei die reflektierende Reflektoroberfläche des Reflektors (3; 13) quer zur Längsrichtung ein zweischenkliges, sich beidseitig einer Mittelebene (9) der Infrarotlampe (2) erstreckendes Querschnittsprofil aufweist, gemäß dem die Schenkel der Reflektoroberfläche von einem in der Mittelebene (9) liegenden Scheitel (10) aus zunächst in rückwärtige, von der Vorderseite (8) der Anordnung wegweisende Richtungen (Rückwärtsrichtungen) verlaufen, im weiteren Verlauf, mit zunehmendem Abstand zur Mittelebene jedoch umkehren und in Vorwärtsrichtungen verlaufen,
**dadurch gekennzeichnet, daß** die Öffnungsbreite des Reflektors (3; 13) etwa doppelt so groß wie der Außendurchmesser der Umhüllung (4) ist.

2. Anordnung nach Anspruch 1,
wobei die Schenkel der Reflektoroberfläche beidseitig der Mittelebene (9) so weit in Vorwärtsrichtungen verlaufen, daß sich zumindest Teile der Infrarot-Strahlungsquelle (5) zwischen den Schenkeln befinden.

3. Anordnung nach Anspruch 1 oder 2,
wobei die Schenkel jeweils zumindest zwei ebene Oberflächenbereiche (14, 15) aufweisen, die sich in Längsrichtung der Infrarot-Strahlungsquelle (5) erstrecken und die gerade Teilstücke des Querschnittsprofils definieren, wobei jeweils zumindest einer (15) der Oberflächenbereiche in eine Rückwärtsrichtung verläuft und jeweils zumindest einer (14) der Oberflächenbereiche, in größerem Abstand zu der Mittelebene (9), in eine Vorwärtsrichtung verläuft.

4. Anordnung nach Anspruch 3,
wobei jeweils einer (15) der ebenen Oberflächenbereiche in eine Rückwärtsrichtung verläuft und jeweils zwei (14) der ebenen Oberflächenbereiche aneinander anschließend und gegeneinander abgewinkelt in Vorwärtsrichtungen verlaufen.

5. Anordnung nach Anspruch 3 oder 4,
wobei zwei (15) der in Rückwärtsrichtungen verlaufenden ebenen Oberflächenbereiche, jeweils einer von beiden Schenkeln, an der Mittelebene (9) zusammenführen und einen Winkel (Ó) zwischen sich einschließen, der größer als 90° ist, insbesondere größer als 135°.

6. Anordnung nach einem der Ansprüche 1 bis 5,
wobei die beiden Schenkel im Querschnitt einen evolventenförmigen Verlauf nehmen, wobei vom Scheitel aus gesehen die Krümmungsstärke abnimmt.

7. Anordnung nach Anspruch 6,
wobei die Evolventen am Scheitel ansetzen und etwa an der am weitesten in Vorwärtsrichtung liegenden Stelle der Schenkel enden.

8. Anordnung nach einem der Ansprüche 1-7,
wobei eine Mehrzahl der Kombinationen mit Reflektor (13) und Infrarotlampe (2) nebeneinander angeordnet ist, wobei die Längsachsen der Infrarotlampe (2) parallel zueinander verlaufen.

9. Anordnung nach Anspruch 8,
wobei die Anordnung mindestens drei der Infrarotlampenund Reflektorkombinationen aufweist und wobei jeweils die Infrarotlampen (2) der am Rande der Anordnung liegenden Kombination eine größere, insbesondere eine um einen Faktor größer oder gleich 1,5, größere Strahlungsleistung hat.

10. Anordnung nach einem der Ansprüche 1-9,
mit einer Luftstrom-Kühleinrichtung zur Zwangskonvektions-Kühlung der Umhüllung (4) und der Reflektoroberfläche.

11. Anordnung nach Anspruch 10,
wobei der Luftstrom etwa in Längsrichtung der Infrarotlampen- und Reflektorkombinationen geführt ist.

12. Anordnung nach Anspruch 10,
wobei der Luftstrom quer zur Längsrichtung der Infrarotlampen- und Reflektorkombination und zumindest teilweise durch einen Zwischenraum zwischen der Umhüllung (4) und dem Scheitel (10) des Reflektors (13) geführt ist.

13. Anordnung nach Anspruch 12,
wobei die Abmessungen des Zwischenraums und die Stärke des Luftstromes derart aufeinander abgestimmt sind, daß zumindest im Bereich des Zwischenraumes Luftwirbel auftreten.

14. Anordnung nach einem der Ansprüche 1-13,
wobei die Infrarotlampe (2) derart ausgebildet und betreibbar ist, daß ein spektrales Strahldichte-Maximum der emittierten Strahlung im Wellenlängenbereich des nahen Infrarot liegt.

## Claims

1. A lamp and reflector arrangement (1; 11) for illuminating objects in directions of a front side (8) (forward directions) of the arrangement, in particular for heating objects by radiation, including a combination comprising:
- an infrared lamp (2) comprising an elongated infrared radiation source (5) for emitting infrared radiation, and an elongated tubular, radiation permeable cover (4) of the infrared radiation source (5), and
- a reflector (3; 13) for reflecting radiation of the infrared radiation source (5) that is not emitted in the direction of the front side (8), which reflector extends along the infrared lamp (2) in the longitudinal direction thereof, the reflecting reflector surface of the reflector(3; 13) comprising a double-leg cross-sectional profile extending transversely to the longitudinal direction on both sides of a middle plane (9) of the infrared lamp (2), according to which cross-sectional profile, the legs of the reflector surface first extend from a vertex (10) situated in the middle plane (9) in rearward directions facing away from the front side (8) of the arrangement (rearward directions), but turn back in their further development with a distance increasing from the middle plane and extend in forward directions,
**characterized in that**
the aperture width of the reflector (3; 13) is approximately twice as large as the outer diameter of the cover (4).

2. The arrangement according to claim 1,
wherein the legs of the reflector surface on both sides of the middle plane (9) extend so far in forward directions that at least parts of the infrared radiation source (5) are situated between the legs.

3. The arrangement according to claim 1 or 2,
wherein the legs each comprise at least two planar surface zones (14, 15) extending in the longitudinal direction of the infrared radiation source (5) and defining straight portions of the cross-sectional profile, with in each case at least one (15) of the surface zones extending in a rearward direction, and in each case at least one (14) of the surface zones extending in a forward direction at a major distance to the middle plane (9).

4. The arrangement according to claim 3,
wherein in each case one (15) of the planar surface zones extends in a rearward direction, and in each case two (14) of the planar surface zones extend in forward directions adjacent to each other and at an angle with respect to each other.

5. The arrangement according to claim 3 or 4,
wherein two (15) of the planar surface zones extending in rearward directions, in each case one of the two legs, converge at the middle plane (9) and enclose an angle (σ) between them that is larger than 90°, in particular larger than 135°.

6. The arrangement according to any one of claims 1 through 5,
wherein the two legs in their cross-sections have an involute shape, with the curvature decreasing seen from the vertex.

7. The arrangement according to claim 6,
wherein the involutes start at the vertex and approximately end at the location situated farthest in the forward direction.

8. The arrangement according to any one of claims 1 through 7,
wherein a plurality of the combinations including a reflector (13) and an infrared lamp (2) are arranged side by side, the longitudinal axes of the infrared lamps (2) extending in parallel to each other.

9. The arrangement according to claim 8,
wherein the arrangement comprises at least three of the infrared lamp and reflector combinations, and wherein in each case the infrared lamps (2) of the combination situated at the edge of the arrangement have a higher radiation power, in particular a radiation power higher by a factor of ≥ 1.5.

10. The arrangement according to any one of claims 1 - 9,
including an airstream cooling means for a forced convection cooling of the cover (4) and the reflector surface.

11. The arrangement according to claim 10,
wherein the airstream is guided approximately in the longitudinal direction of the infrared lamp and reflector combinations.

12. The arrangement according to claim 10,
wherein the airstream is guided transversely to the longitudinal direction of the infrared lamp and reflector combinations and in least partially through an interspace between the cover (4) and the vertex (10) of the reflector (13).

13. The arrangement according to claim 12,
wherein the dimensions of the interspace and the intensity of the airstream are adapted to each other in such a manner that vortices arise at least in the area of the interspace.

14. The arrangement according to any one of claims 1 through 13,
wherein the infrared lamp (2) is configured and can be operated in such a manner that a spectral beam density maximum of the emitted radiation is in the close infrared wavelength range.

## Revendications

1. Disposition de lampes et de réflecteur (1 ; 11) pour l'illumination d'objets dans les directions d'un côté avant (8) (directions en avant) de la disposition, en particulier pour le chauffage par rayonnement d'objets avec une combinaison qui présente ce qui suit:
- une lampe à infrarouge (2) qui présente une source de rayonnement infrarouge (5) étendue en longueur pour l'émission de rayonnement infrarouge et un enveloppement (4) en forme de tuyau, laissant passer le rayonnement, étendu en longueur, de la source de rayonnement infrarouge (5) et
- un réflecteur (3 ; 13) pour la réflexion d'un rayonnement de la source de rayonnement infrarouge (5) non émis en direction du côté avant (8), qui s'étend le long de la lampe à infrarouge (2) dans sa direction longitudinale, la surface de réflecteur réfléchissante du réflecteur (3 ; 13) présentant transversalement à la direction longitudinale un profil de section transversale à deux branches s'étendant des deux côtés d'un niveau médian (9) de la lampe à infrarouge (2) selon lequel les branches des surfaces de réflecteurs s'étendent d'un sommet (10) figurant dans le niveau médian (9), d'abord en des directions s'étendant en sens arrière (directions arrières), s'écartant du côté avant (8) de la disposition, dans la suite du parcours, avec un écartement augmentant du niveau médian toutefois se rebroussent et s'étendent en des directions avant, **caractérisée en ce que** la largeur d'ouverture du réflecteur (3 ; 13) est environ le double du diamètre extérieur de l'enveloppement (4).

2. Disposition selon la revendication 1,
dans laquelle les branches de la surface de réflecteur s'étendent des deux côtés du plan médian (9) tellement loin vers l'avant qu'au moins des parties de la source de rayonnement infrarouge (5) figurent entre les branches.

3. Disposition selon la revendication 1 ou 2,
dans laquelle les branches présentent chaque fois au moins deux zones planes de surface (14, 15) qui s'étendent dans la direction longitudinale de la source de rayonnement infrarouge (5) et qui définissent des pièces partielles droites du profil de section transversale, dans laquelle chaque fois au moins l'une (15) des zones de surface s'étend en direction arrière et chaque fois au moins l'une (14) des zones de surface, en un écartement plus grand du plan médian (9), s'étend en une direction avant.

4. Disposition selon la revendication 3,
dans laquelle chaque fois l'une (15) des zones planes de surface s'étend en une direction arrière et chaque fois deux (14) des zones planes de surface s'étendent en se raccordant l'une à l'autre et coudées l'une par rapport à l'autre en des directions avant.

5. Disposition selon la revendication 3 ou 4,
dans laquelle deux (15) des zones planes de surface s'étendant en des directions arrières rassemblent chaque fois l'un des deux bras au plan médian (9) et enferment entre elles un angle (σ) qui est plus grand que 90°, en particulier plus grand que 135°.

6. Disposition selon l'une quelconque des revendications 1 à 5,
dans laquelle les deux bras, en section transversale, évoluent selon une développée, l'amplitude de la courbure diminuant vue du sommet.

7. Disposition selon la revendication 6,
dans laquelle les développées s'unissent au sommet et se terminent sensiblement à l'emplacement des bras figurant le plus loin en direction avant.

8. Disposition selon l'une quelconque des revendications 1 à 7,
dans laquelle une pluralité de combinaisons comportant un réflecteur (13) et une lampe à infrarouge (2) sont disposées les unes à côté des autres, les axes longitudinaux des lampes à infrarouge (2) s'étendant parallèlement les uns par rapport aux autres.

9. Disposition selon la revendication 8,
dans laquelle la disposition présente au moins trois des combinaisons lampes à infrarouge et réflecteur, et dans laquelle chaque fois les lampes à infrarouge (2) de la combinaison figurant au bord de la disposition possèdent une puissance de rayonnement plus grande, en particulier d'un facteur plus grand que ou égal à 1,5.

10. Disposition selon l'une quelconque des revendications 1 à 9, comportant un dispositif de refroidissement par air soufflé pour le refroidissement par convection forcée de l'enveloppement (4) et de la surface de réflecteurs.

11. Disposition selon la revendication 10,
dans laquelle le courant d'air est conduit sensiblement en direction longitudinale des combinaisons de lampes à infrarouge et de réflecteur.

12. Disposition selon la revendication 10,
dans laquelle le courant d'air est conduit transversalement à la direction longitudinale des combinaisons de lampes à infrarouge et de réflecteur et au moins partiellement à travers un espace intermédiaire entre l'enveloppement (4) et le sommet (10) du réflecteur (13).

13. Disposition selon la revendication 12,
dans laquelle les dimensions de l'espace intermédiaire et l'intensité du courant d'air sont adaptés les uns aux autres de manière telle que des tourbillons se présentent, au moins dans la zone de l'espace intermédiaire.

14. Disposition selon l'une quelconque des revendications 1 à 13,
dans laquelle la lampe à infrarouge (2) est constituée et peut être utilisée de manière telle qu'un maximum spectral de densité de rayonnement du rayonnement émis figure dans la plage de longueur d'ondes de l'infrarouge proche.
